# FASCICULE DE BREVET EUROPEEN

(11) **EP 0 719 391 B1**
(45) Date de publication et mention de la délivrance du brevet: **15.10.1997**
(21) Numéro de dépôt: 95904598.0
(22) Date de dépôt: 22.12.1994
(51) Int. Cl.: F16D 55/227

(54) **FREIN A DISQUE A RECUL AMELIORE**
SCHEIBENBREMSE MIT VERBESSERTER SATTELRÜCKFÜHRUNG
DISC BRAKE WITH IMPROVED CALIPER RETURN

(30) Priorité: 07.01.1994 FR 9400125
(43) Date de publication de la demande: 03.07.1996
(73) Titulaire: Bosch Systemes de Freinage, 93700 Drancy (FR)
(72) Inventeur: RUIZ BUSQUETS, Josep, E-08820 Barcelone (ES)
(74) Mandataire: Bentz, Jean-Paul
(86) Numéro de dépôt international: FR9401523
(87) Numéro de publication internationale: WO9518928

(56) Documents cités:
- DE-A- 2 930 179
- FR-A- 2 422 864
- GB-A- 1 572 451
- GB-A- 2 202 287
- PATENT ABSTRACTS OF JAPAN vol. 18, no. 51 (M-1548) 26 Janvier 1994 & JP,A,52 072 562 (NISSIN KOGYO) 19 Octobre 1993

## Description

La présente invention concerne un frein à disque pour véhicule à moteur, comprenant :
- deux éléments de frein mobiles l'un par rapport à l'autre, dont l'un est un étrier chevauchant un disque de frein, et dont l'autre est une chape fixée au véhicule;
- des moyens de serrage comprenant un cylindre solidaire de l'étrier et présentant en regard du disque une ouverture fermée par un piston;
- des moyens de guidage permettant un coulissement de l'étrier par rapport à la chape lors d'un actionnement des moyens de serrage, ces moyens de guidage comprenant au moins une colonnette de guidage fixée à la chape, et un alésage borgne formé dans l'étrier et dans lequel coulisse la colonnette, un manchon annulaire élastiquement déformable entourant l'ouverture de l'alésage et la colonnette ; et
- deux patins de friction tournés vers des faces opposées du disque, enserrés entre le piston et l'étrier, et appliqués sur le disque lors de l'actionnement des moyens de serrage,

Un frein de ce type est connu dans l'art antérieur, comme le montre le document FR-A-2 422 864.

Un problème très ancien qui se pose dans les freins de ce type, dits "à étrier coulissant", est celui du retour de l'étrier dans sa position de repos après l'actionnement du frein.

En effet, contrairement au piston, qui est mû directement par le fluide hydraulique de freinage, l'étrier n'est mû que par réaction mécanique du piston sur l'un des patins qui s'appuie sur le disque et doit de surcroît coulisser sur la ou les colonnettes pour retourner dans sa position initiale, ce retour étant donc assez délicat.

Dans ces conditions, il arrive fréquemment que le patin qui se trouve en regard de la face du disque opposée à celle vers laquelle est tourné le piston frotte sur le disque même lorsque le frein n'est pas actionné et s'use prématurément tout en ralentissant indûment le véhicule.

L'invention se situe dans ce contexte et a pour but de proposer un frein à disque à étrier coulissant, de structure simple, mais dans lequel néanmoins l'étrier revient régulièrement dans sa position de repos dès que le frein est relâché.

A cette fin, le frein de l'invention, par ailleurs conforme au préambule ci-dessus, est essentiellement caractérisé en ce que l'alésage percé dans l'étrier présente une ouverture tournée dans une direction opposée à celle vers laquelle est tournée l'ouverture du cylindre, et en ce que l'air susceptible de s'échapper de l'alésage se trouve au moins partiellement confiné à l'intérieur dudit manchon.

Dans ces conditions, l'air emprisonné dans l'alésage borgne et/ou dans le manchon, et qui se trouve dilaté par l'élévation de température que produit l'actionnement du frein en raison du frottement des patins sur le disque, repousse l'étrier dans sa position de repos en exerçant une force dirigée suivant l'axe de la ou des colonnette(s).

D'autres caractéristiques et avantages de l'invention ressortiront clairement de la description qui en est faite ci-après, à titre indicatif et nullement limitatif, en référence aux dessins annexés, dans lesquels:
- la figure 1 est une vue de dessus et en coupe partielle d'un frein non conforme à l'invention ; et
- la figure 2 est une vue schématique et en coupe partielle d'un frein conforme à l'invention.

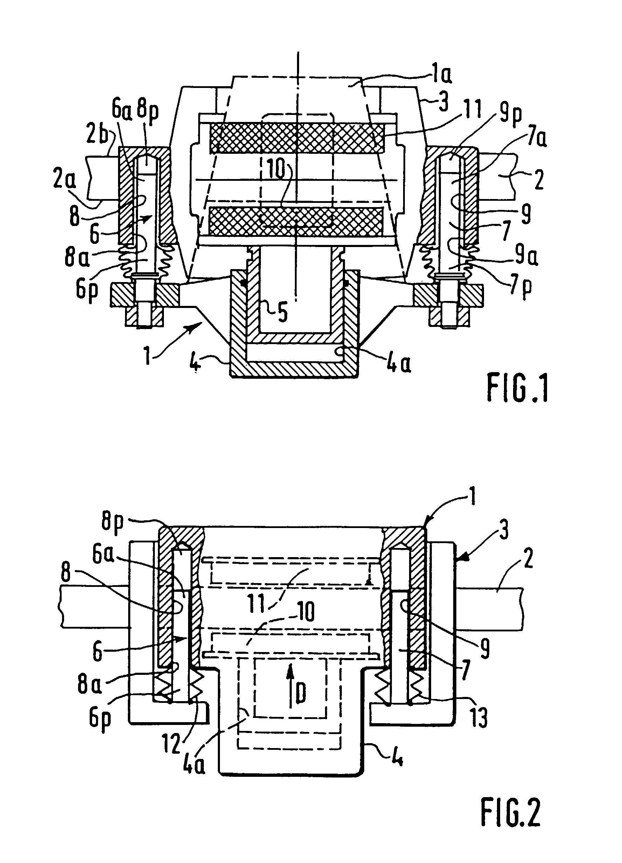

Comme le montre la figure 1, qui illustre seulement le domaine général de l'invention, celle-ci concerne un frein à disque pour véhicule à moteur, ce frein étant composite ou non et comprenant :
- deux éléments de frein mobiles l'un par rapport à l'autre, dont l'un est un étrier 1 chevauchant un disque 2 de frein, et dont l'autre est une chape 3 fixée au véhicule;
- des moyens de serrage comprenant un cylindre 4 solidaire de l'étrier 1 et présentant en regard du disque une ouverture 4a fermée par un piston 5;
- des moyens de guidage permettant un coulissement de l'étrier 1 par rapport à la chape 3 lors d'un actionnement des moyens de serrage, ces moyens de guidage comprenant au moins une colonnette de guidage telle que 6, 7 fixée à l'un des éléments de frein, et un alésage borgne tel que 8, 9, formé dans l'autre élément de frein et dans lequel coulisse chaque colonnette; et
- deux patins de friction 10, 11 tournés vers des faces opposées 2a, 2b du disque, enserrés entre le piston 5 et une mâchoire la de l'étrier 1, et appliqués sur le disque lors de l'actionnement des moyens de serrage.

Chaque colonnette telle que 6 ou 7, et l'alésage qui lui correspond, tel que 8, 9, constituent respectivement des premier et second organes de guidage dont chacun présente une partie antérieure, repérée par un indice "a", et une partie postérieure repérée par un indice "p".

Plus précisément, la partie antérieure de chaque colonnette 6, 7, est formée par l'extrémité libre de celle-ci, telle que 6a, 7a, tandis que la partie postérieure de chaque colonnette 6, 7, est formée par l'extrémité liée de celle-ci, telle que 6p, 7p.

La partie antérieure de chaque alésage 8, 9, est formée par l'ouverture de cet alésage, telle que 8a, tandis que la partie postérieure de chaque alésage 8, 9, est formée par le fond de cet alésage, tel que 8p.

Par ailleurs, un manchon annulaire 12, 13 élastiquement déformable, adoptant par exemple la forme d'un soufflet et de préférence totalement étanche entoure l'ouverture 8a, de chaque alésage et la colonnette 6, 7 correspondante.

L'invention concerne plus précisément un frein à disque tel qu'illustré dans le document FR-A-2 422 864, dans lequel les colonnettes sont portées par la chape et coulissent dans des alésages formés dans l'étrier.

Selon l'invention, représentée à la figure 2, la partie postérieure 8p de l'alésage 8 est plus éloignée du fond du cylindre 4 que la partie antérieure 8a de cet alésage, la situation étant en l'occurrence la même pour l'alésage 9.

Dans ces conditions, l'ouverture 8a de l'alésage 8 percé dans l'étrier 1 est tournée dans une direction opposée à la direction D vers laquelle est tournée l'ouverture 4a du cylindre 4, la situation étant en l'occurrence la même pour l'alésage 9.

Grâce à cet arrangement, l'air susceptible de s'échapper par exemple de l'alésage 8 lorsque la colonne 6 y pénètre se trouve au moins partiellement confiné à l'intérieur du manchon 12, la situation étant en l'occurrence la même pour la colonnette 7, l'alésage 9 et le manchon 13, l'air repoussant ainsi l'étrier dans sa position de repos, que cet air se trouve dans le fond de l'alésage borgne ou à l'intérieur du manchon.

## Revendications

1. Frein à disque pour véhicule à moteur, comprenant :
- deux éléments de frein mobiles l'un par rapport à l'autre, dont l'un est un étrier (1) chevauchant un disque (2) de frein, et dont l'autre est une chape (3) fixée au véhicule;
- des moyens de serrage comprenant un cylindre (4) solidaire de l'étrier et présentant en regard du disque une ouverture (4a) fermée par un piston (5);
- des moyens de guidage permettant un coulissement de l'étrier par rapport à la chape lors d'un actionnement des moyens de serrage, ces moyens de guidage comprenant au moins une colonnette de guidage (6, 7) fixée à la chape (3), et un alésage borgne (8, 9) formé dans l'étrier (1) et dans lequel coulisse la colonnette, un manchon annulaire élastiquement déformable (12, 13) entourant l'ouverture (8a) de l'alésage et la colonnette (6) ; et
- deux patins de friction (10, 11) tournés vers des faces opposées (2a, 2b) du disque (2), enserrés entre le piston et l'étrier, et appliqués sur le disque lors de l'actionnement des moyens de serrage,
caractérisé en ce que l'alésage percé dans l'étrier présente une ouverture (8a) tournée dans une direction opposée à celle (D) vers laquelle est tournée l'ouverture (4a) du cylindre, et en ce que l'air susceptible de s'échapper de l'alésage (8) se trouve au moins partiellement confiné à l'intérieur dudit manchon (12).

## Claims

1. Disk brake for a motor vehicle, comprising:
- two brake elements which can move one with respect to the other, one of which is a caliper (1) straddling a brake disk (2), and the other of which is a carrier (3) fixed to the vehicle;
- clamping means comprising a cylinder (4) secured to the caliper and exhibiting, facing the disk, an opening (4a) closed by a piston (5);
- guide means allowing a sliding of the caliper with respect to the carrier when the clamping means are actuated, these guide means comprising at least one guide pin (6, 7) fixed to the carrier (3), and a blind bore (8, 9) formed in the caliper (1) and in which the guide pin slides, an elastically deformable annular sleeve (12, 13) surrounding the opening (8a) of the bore and the guide pin (6); and
- two friction pads (10, 11) pointing towards opposite faces (2a, 2b) of the disk (2), clamped between the piston and the caliper, and applied to the disk when the clamping means are actuated,
characterized in that the bore pierced in the caliper has an opening (8a) pointing in the opposite direction from that (D) in which the opening (4a) in the cylinder points, and in that the air capable of escaping from the bore (8) is at least partially contained inside the said sleeve (12).

## Patentansprüche

1. Scheibenbremse für ein Kraftfahrzeug, mit:
- zwei relativ zueinander bewegbaren Bremselementen, von denen das eine ein Bremssattel (1) ist, der eine Bremsscheibe (2) umgreift, und von denen das andere ein Bügel (3) ist, der am Fahrzeug befestigt ist;
- Spannmitteln, die einen Zylinder (4) enthalten, der fest mit dem Bremssattel verbunden ist und gegenüber der Scheibe eine Öffnung (4a) aufweisen, die von einem Kolben (5) verschlossen ist;
- Führungsmitteln, die eine Verschiebung des Bremssattels bezüglich des Bügels bei einer Betätigung der Spannmittel ermöglichen, wobei diese Führungsmittel wenigstens eine an dem Bügel (3) befestigte Führungsstange (6, 7) und eine Blindbohrung (8, 9) enthalten, die in dem Bremssattel (1) gebildet ist und in welcher die Stange gleitet, wobei eine elastisch verformbare ringförmige Muffe (12, 13) die Öffnung (8a) der Bohrung und die Stange (6) umgibt; und
- zwei Reibbelägen (10, 11), die entgegengesetzten Seiten (2a, 2b) der Scheibe (2) zugewandt sind, zwischen dem Kolben und dem Bremssattel eingespannt sind und bei der Betätigung der Spannmittel an die Scheibe angelegt werden,
dadurch gekennzeichnet, daß die in dem Bremssattel ausgebildete Bohrung eine Öffnung (8a) aufweist, die in einer Richtung ausgerichtet ist, die entgegengesetzt zu derjenigen (D) ist, in die die Öffnung (4a) des Zylinders gerichtet ist, und daß die Luft, die aus der Bohrung (8) entweichen kann, wenigstens teilweise im Inneren der Muffe (12) eingeschlossen ist.
